# EUROPÄISCHE PATENTSCHRIFT

(11) **EP 1 675 766 B1**
(45) Veröffentlichungstag und Bekanntmachung des Hinweises auf die Patenterteilung: **19.09.2007**
(21) Anmeldenummer: 04790411.5
(22) Anmeldetag: 14.10.2004
(51) Int. Cl.: B62D 29/00

(54) **VERBUNDBAUTEIL, INSBESONDERE QUERTRÄGER**
COMPOSITE PART, ESPECIALLY CROSS MEMBER
ELEMENT COMPOSITE, NOTAMMENT UNE TRAVERSE

(30) Priorität: 14.10.2003 DE 10348418
(43) Veröffentlichungstag der Anmeldung: 05.07.2006
(73) Patentinhaber: Behr GmbH & Co. KG, 70469 Stuttgart (DE)
(72) Erfinder: FEITH, Thomas, 70825 Korntal-Münchingen (DE); MERKLE, Christian, 73655 Plüderhausen (DE); WOLF, Walter, 71570 Oppenweiler-Zell (DE)
(86) Internationale Anmeldenummer: PCT/EP2004/011555
(87) Internationale Veröffentlichungsnummer: WO 2005/037632

(56) Entgegenhaltungen:
- DE-C1- 10 037 374
- DE-C1- 10 065 219
- FR-A- 2 783 746
- FR-A- 2 799 717
- US-B1- 6 216 810
- US-B1- 6 421 979
- US-B1- 6 503 585

## Beschreibung

Die Erfindung betrifft ein aus Metall und Kunststoff gefertigtes Verbundbauteil, insbesondere einen Querträger zwischen den A-Säulen eines Kraftfahrzeuges. Ein Querträger in Form eines Metall-Kunststoff-Verbundbauteils nach dem Oberbegriff des Anspruchs 1 ist aus FR2799717 A1 bekannt.

Ein aus der DE 100 64 522 A1 bekanntes Bauteil weist einen im Wesentlichen rohrförmigen Grundkörper auf, der innenseitig mit Kunststoff ausgekleidet ist und damit einen Kanal zur Führung von Medien, beispielsweise Luft, bildet. Der Kunststoff ist vorzugsweise im Spritzgussverfahren in den Grundkörper eingebracht, so dass der Kanal praktisch den gesamten Hohlquerschnitt des Grundkörpers ausfüllt. Der Verlauf des Kanals ist somit an den Verlauf des Profils des Grundkörpers gebunden.

Der Erfindung liegt die Aufgabe zu Grunde, ein Metall-Kunststoff-Verbundbauteil anzugeben, welches einen in einem Metallprofil angeordneten Kanal umfasst und bei weitreichender Gestaltungsfreiheit bezüglich der Form des Kanals besonders rationell herstellbar ist.

Diese Aufgabe wird erfindungsgemäß gelöst durch ein Verbundbauteil mit den Merkmalen des Anspruchs 1. Dieses Verbundbauteil weist ein offenes Metallprofil auf, in welchem ein in dessen Erstreckungsrichtung verlaufender Kanal, insbesondere Lüftungskanal, angeordnet ist. Die innere Wandung des Kanals ist zumindest größtenteils aus Kunststoff gebildet. Zur Bildung mindestens einer Wandung des Kanals und/oder zur mechanischen Stabili-sierung des Kanals ist ein zumindest teilweise aus Kunststoff gefertigtes Einlegeteil vorgesehen, welches derart am Metallprofil befestigt ist, dass eine an einer Öffnung in der Wandung des Metallprofils aus diesem ausgeformte Haltekontur den in diese eingepressten Kunststoff des Einlegeteils hinterschneidet. Durch eine derartige, auch als Kragenfügen bezeichnete Befestigung ist das Kunststoffteil form- und kraftschlüssig am Metallteil, dessen Haltekontur vorzugsweise als stanzkragenartige Erhebung konfiguriert ist, gehalten. Das Kragenfügen ist beispielsweise aus der DE 100 65 219 C1 bekannt und hat als nachträgliches Fügen einer Hybridstruktur aus Kunststoff und Metall im Vergleich zum Fügen im Spritzgießprozess insbesondere den Vorteil einer größeren Designfreiheit. Die Form des durch Kragenfügen mit dem Metallprofil verbundenen Einlegeteils, welches eine Wandung des Kanals bildet oder zumindest abstützt, ist vom Verlauf des Metallprofils entkoppelt. Damit ist auf einfache Weise die Möglichkeit gegeben, den Querschnitt des Kanals den jeweiligen Anforderungen anzupassen und insbesondere in Längsrichtung des Metallprofils zu variieren. Die Kraft übertragende Verbindung zwischen Metall- und Kunststoffkomponenten ermöglicht eine besonders leichte und gleichzeitig stabile Gestaltung des Verbundbauteils. Weitere Vorteile sind dadurch gegeben, dass die Toleranzanforderungen an das Metallprofil sowie an das Spritzgießwerkzeug zur Herstellung des Einlegeteils geringer sind als im Fall eines Fügens der Metall- und Kunststoffkomponenten eines Hybridbauteils im Spritzgießprozess. Ferner sind keine Verzugsprobleme bei der Herstellung des Verbundbauteils zu erwarten.

Das Metallprofil ist beispielsweise als U- oder Omega-Profil ausgebildet. In besonders bevorzugter Ausgestaltung wird ein Hutprofil verwendet, welches sowohl ein besonders einfaches Einlegen eines vorgefertigten Einlegeteils in das Metallteil ermöglicht als auch eine gute Eignung zum Befestigen des Einlegeteils mittels Kragenfügen aufweist.

Nach einer ersten Ausführungsform ist ein Teil der Wandung des Kanals, nämlich zumindest die der offenen Seite des Metallprofils zugewandte Wand des Kanals, durch das Einlegeteil gebildet. Die übrigen Wände des Kanals sind hierbei vorzugsweise durch ein zweites Kunststoffteil, welches in das Metallprofil beispielsweise eingeklebt oder eingespritzt ist, gebildet.

Nach einer zweiten Ausführungsform ist ein vorgefertigter Kanal als zweites Kunststoffteil im Metallprofil angeordnet und durch das Einlegeteil in diesem gehalten oder zumindest stabilisiert. Sowohl nach dem ersten als auch nach dem zweiten. Ausführungsbeispiel sind das Einlegeteil einerseits und das zusätzliche Kunststoffteil andererseits vorzugsweise aus unterschiedlichen Materialien gefertigt, wobei das Material des einen Einlegeteils typischerweise höhere Anforderungen bezüglich der mechanischen Festigkeit zu erfüllen hat.

Nach einer dritten Ausführungsform ist zusätzlich zum Einlegeteil kein weiteres Kunststoffteil innerhalb des Metallprofils vorgesehen. Der vollständig vorgefertigte, durch das Einlegeteil gebildete Kanal ist dabei direkt durch Kragenfügen am Metallprofil befestigt. Die Herstellung des Kanals erfolgt beispielsweise durch das Verkleben, Verschweißen oder Verclipsen mehrerer Kunststoffteile.

In jeder der genannten Ausführungsformen ist eine zusätzliche Verstärkung des Metallprofils und/oder des Kanals durch ein zusätzliches Einlegeteil aus Metall oder durch ein Einlegeteil aus einem Metall-Kunststoff-Verbund erzielbar. Als Bestandteil des Einlegeteils und/oder als sonstige Bestandteile des Verbundbauteils sind des Weiteren geschäumte Kunststoffe verwendbar. Diese haben neben den Vorteilen eines geringen Gewichts und eine r günstigen Relation zwischen Gewicht und mechanischer Stabilität besonders gute geräuschdämmende und/oder isolierende, insbesonders thermisch isolierende Eigenschaften. In Abhängigkeit von der Funktion der jeweiligen Teile sind beispielsweise auch Mehrkomponenten-Spritzgussteile verwendbar.

Das im Metallprofil angeordnete Einlegeteil weist vorzugsweise eine Rippenstruktur zur Erhöhung der mechanischen Stabilität auf. Hierbei kann das Einlegeteil entweder einen Teil der Wandung des Kanals bilden oder außerhalb des Kanals angeordnet sein. In jedem Fall ist die Rippenstruktur zumindest: teilweise, vorzugsweise vollständig, innerhalb des Metallprofils angeordnet-In besonders vorteilhafter Weise wird die Rippenstruktur zugleich dazu benutzt, innerhalb des Querschnitts des Metallprofils mehrere Querschnittsbereiche von einander zu trennen. Hierbei bildet beispielsweise jeder der einzelnen Querschnittsbereiche einen Kanal für ein Medium, beispielsweise Luft oder eine Flüssigkeit. Alternativ sind zumindest einer der Kanäle und/oder ein zwischen von einander beabstandeten Kanälen gebildeter Raum als Kabelkanal nutzbar. Verstärkende Strukturen aus Metall, Kunststoff oder einem Metall-Kunststoff-Verbund können beispielsweise durch Schweißen, Kleben, Clinchen oder auf sonstige Weise mit dem Metallprofil verbunden sein. Zur Verhinderung von Beulen des dünnwandigen Metallprofils oder eingelegter Kunststoffprofile sind Stegbleche ebenso wie Schaumstrukturen oder Kombinationen solcher Strukturen geeignet.

Der Vorteil der Erfindung liegt insbesondere darin, dass ein räumlich beliebiger Verlauf eines vollständig oder teilweise aus Kunststoff gefertigten Lüftungskanals innerhalb eines Profils aus Metall in belastungsgerechter Weise rationell durch nachträgliches Fügen vorgefertigter Metall- und Kunststoffteile realisierbar ist.

Nachfolgend werden mehrere Ausführungsbeispiele der Erfindung anhand einer Zeichnung näher erläutert. Hierin zeigen jeweils in schematischer Querschnittsdarstellung:
- Fig. 1,2: jeweils ein Ausführungsbeispiel eines Verbundbauteils mit einem Metallprofil und einem in diesem angeordneten Kanal,
- Fig. 3: die Befestigung eines Kunststoffteils an einem Metallteil mittels Kragenfügen,
- Fig. 4 bis 7: jeweils ein Ausführungsbeispiel eines Verbundbauteils mit zwei Kanälen,
- Fig. 8: ein Verbundbauteil mit zwei Kanälen und drei zusätzlichen Hohlräumen,
- Fig. 8a: ein Verbundbauteil mit zwei Kanälen und zusätzlichem Einlegeteil,
- Fig. 9: ein Verbundbauteil mit zwei Kanälen in perspektivischer Darstellung,
- Fig. 10a bis 10c: das Verbundbauteil gemäß Fig. 9 in seinen einzelnen Elementen,
- Fig. 11: ein Verbundbauteil mit einem kreisförmigen Kanal, und
- Fig. 11a: ein Verbundbauteil mit einem kreisförmigen Kanal versetzt geschnitten.

Einander entsprechende oder gleichwirkende Teile sind in allen Figuren mit den gleichen Bezugszeichen versehen.

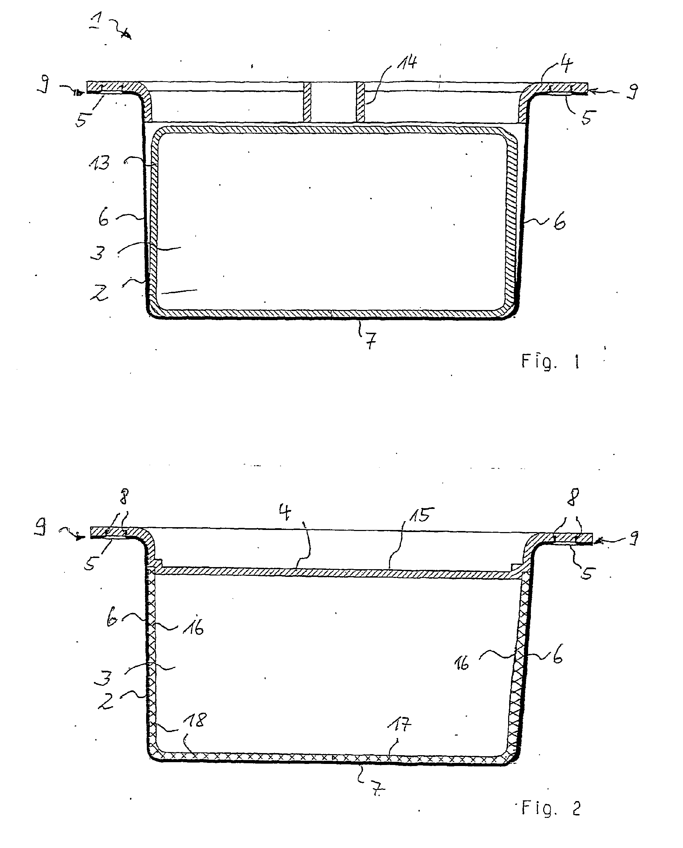

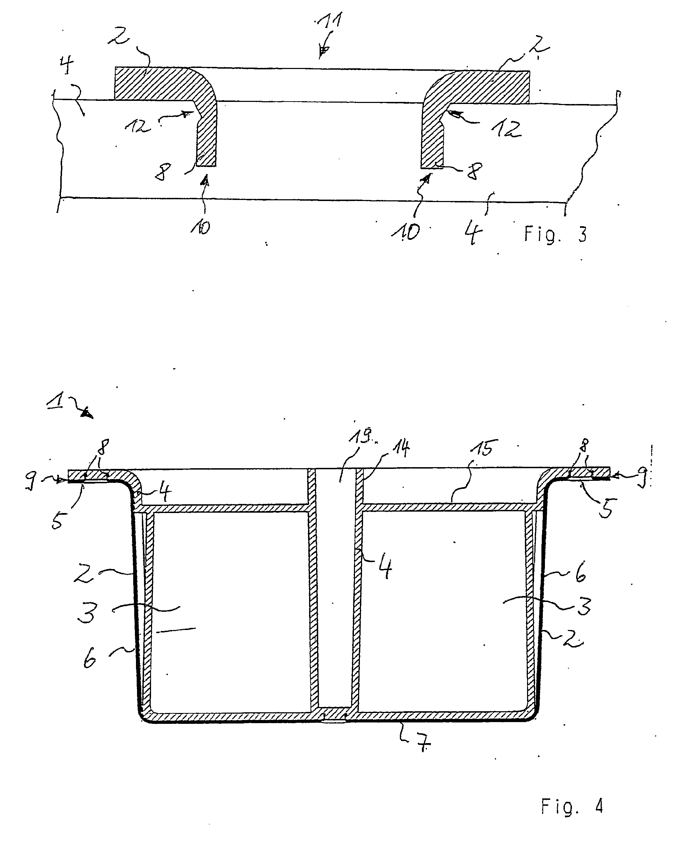

Sämtliche Ausführungsbeispiele betreffen ein Verbundbauteil 1, welches ein offenes Metallprofil 2 in Form eines Hutprofils umfasst und als Querträger zwischen den A-Säulen eines Kraftfahrzeugs angeordnet ist. In nicht dargestellter Weise befinden sich am Metallprofil 2 Fügestellen oder Halter für eine Instrumententafel oder Einbauten in ein Cockpitmodul. Innerhalb des Metallprofils 2 befindet sich mindestens ein Kanal 3, welcher der Luftzuführung in den Innenraum des Kraftfahrzeugs dient. Das Verbundbauteil 1 umfasst des Weiteren ein aus Kunststoff gefertigtes im PMA-Verfahren (post mould assembly) eingefügtes Einlegeteil 4, welches zumindest einen Teil der Wandung des Kanals 3 bildet und/oder dessen Stabilität erhöht. Die nachfolgenden Ausführungen beziehen sich, soweit nicht anders festgelegt, sowohl auf die einfachen Ausgestaltungen nach den Figuren 1 und 2 als auch auf die Weiterbildungen nach den Figuren 4 bis 8.

Das zwei Randabschnitte 5, zwei Seitenabschnitte 6 sowie eine Basisfläche 7 umfassende Metallprofil 2 weist zumindest an den Randabschnitten 5 stanzkragenartige Erhebungen 8 auf, an welchen das Einlegeteil 4 kraft- und formflüssig befestigt ist. Diese Art der Befestigung ist auch als Kragenfügen bezeichnet und prinzipiell aus der DE 100 65 219 C1 bekannt. Das Einlegeteil 4 ist beispielsweise durch Kunststoffspritzguss gefertigt. Die Toleranzanforderungen sowohl an das Metallprofil 2 als auch an das Einlegeteil 4 sind hierbei insbesondere im Vergleich zur Herstellung eines Metall-Kunststoff-Verbundbauteils im Spritzgießprozess (IMA, in mould assembly) relativ gering. Des Weiteren sind praktisch keine Probleme durch Verzug zu erwarten. Die an den Erhebungen 8 gebildeten Fügestellen 9 zwischen dem Metallprofil 2 und dem Einlegeteil 4 tragen insgesamt zu einer erhöhten Stabilität des Verbundbauteils 1 bei.

Die Befestigung des Einlegeteils 4 am Metallprofil 2 wird im Folgenden anhand Figur 3 näher erläutert. Die Erhebung 8 bildet eine aus dem Metallprofil 2 heraus gebogene Haltekontur 10, welche in Draufsicht auf die Oberfläche des Metallprofils 2 eine kreisrunde Form aufweist, wobei in Figur 2 lediglich ein Ausschnitt einer Öffnung 11 im Metallprofil 2 sichtbar ist. Die stanzkragenartige Erhebung 8, in welche das Einlegeteil 4 eingepresst ist, ist im Querschnitt derart geformt, dass ein Hinterschnitt 12 entsteht, welcher zu einer besonders stabilen und zuverlässigen Befestigung des Einlegeteils 4 aus Kunststoff am Metallprofil 2 beiträgt. Der Hinterschnitt 12, auch als Einschnürung der Erhebung 8 bezeichnet, wird erzeugt, indem vor der Kragenherstellung eine kreisrunde Rille in die flache Oberfläche des Metallprofils 2 geprägt wird.

Im Ausführungsbeispiel nach Figur 1 ist der Kanal 3 durch ein Rechteckprofil 13 aus Kunststoff, welches in das Metallprofil 2 eingelegt ist, gebildet. Das an der Basisfläche 7 und zumindest teilweise an den Seitenabschnitten 6 anliegende Rechteckprofil 13 ist im Metallprofil 2 gehalten durch das Einlegeteil 4, welches zur Verstärkung eine Rippenstruktur 14 aufweist. Trotz eines im Vergleich zum Material des Einlegeteils 4 relativ nachgiebigen Kunststoffs, aus welchem der Kanal 3 gefertigt ist, ist dieser formstabil im Metallprofil 2 eingeschlossen. Im dargestellten Querschnitt füllt der Kanal 3 den vom Metallprofil 2 gebildeten Querschnitt nahezu vollständig aus. Abweichend hiervon kann in nicht dargestellten Querschnittsbereichen des Verbundbauteils 1 der Kanal 3 verjüngt sein, um zusätzlichen Raum für weitere Installationen innerhalb des Metallprofils 2 zu bilden. Ebenso ist auf einfache Weise die Fertigung verschiedener Verbundbauteile 1 auf Basis gleichartiger Metallprofile 2 mit unterschiedlich geformten Kanälen 3, insbesondere Lüftungskanälen, möglich.

Im Ausführungsbeispiel nach Figur 2 ist eine in der Darstellung oben angeordnete, der Basisfläche 7 gegenüber liegende Abdeckung 15 des Kanals 3 durch das Einlegeteil 4 gebildet, während an die Seitenabschnitte 6 des Metallprofils 2 angrenzende Seitenwände 16 sowie eine an die Basisfläche 7 des Metallprofils 2 angrenzende Grundfläche 17 durch eine Auskleidung 18 aus Kunststoff gebildet sind. Die Auskleidung 18 als weiteres Kunststoffteil ist hierbei in das Metallprofil 2 eingeklebt oder im Spritzgussverfahren eingespritzt oder eingeschäumt. Insgesamt ist wie im Ausführungsbeispiel nach Figur 1 die gesamte innere Oberfläche des Kanals 3 aus Kunststoff gebildet.

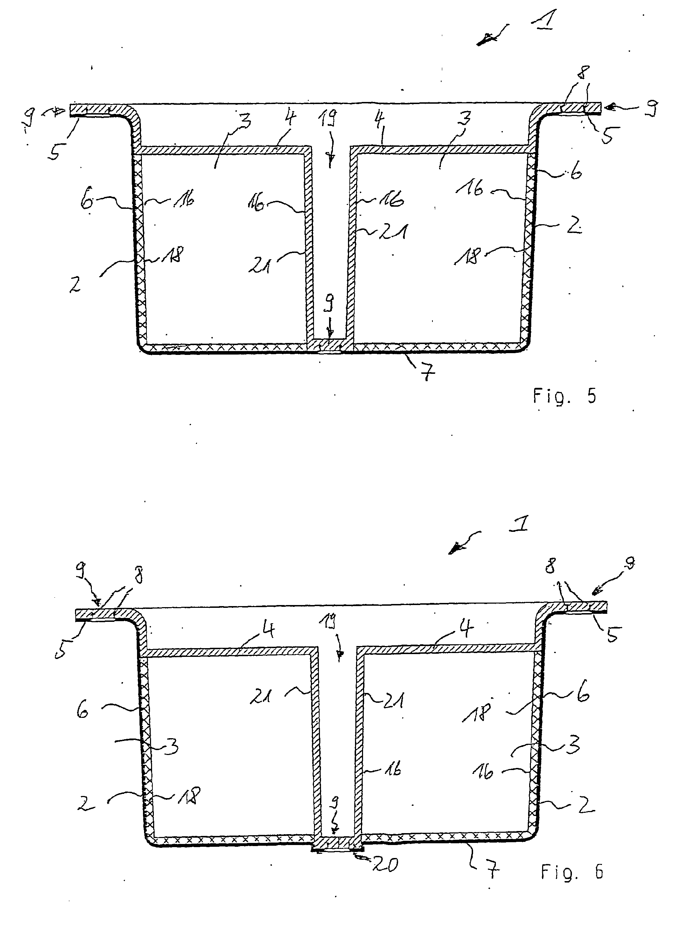

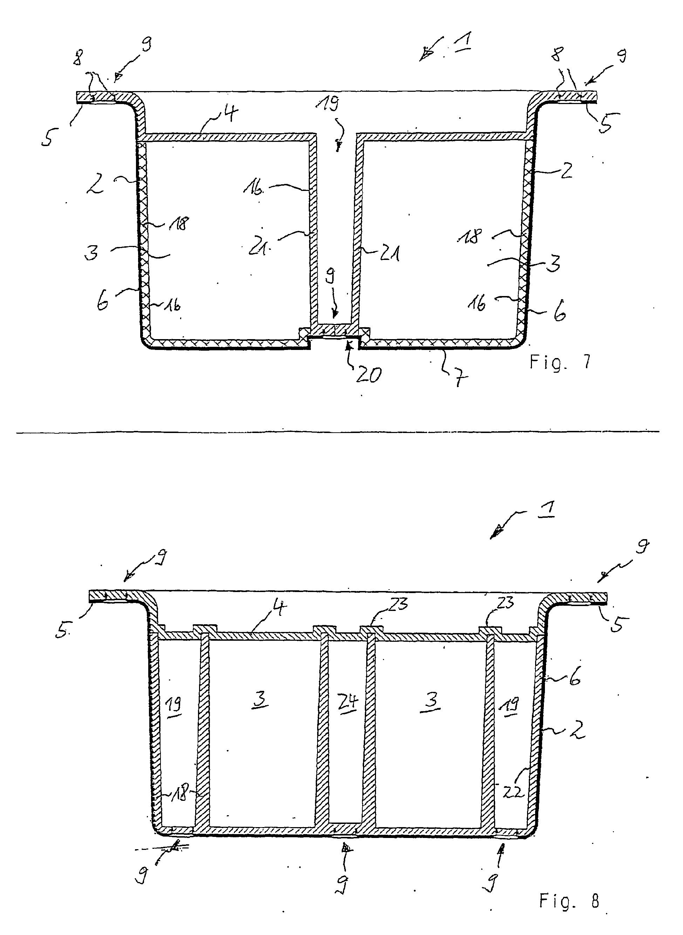

Die Figuren 4 bis 7 zeigen jeweils ein Ausführungsbeispiel eines Verbundbauteils 1, welches zwei Kanäle 3 sowie einen zwischen diesen angeordneten Freiraum 19 aufweist. Im Ausführungsbeispiel nach Figur 4 ist das Einlegeteil 4 einschließlich der Kanäle 3 einstückig ausgebildet, während in den Ausführungsbeispielen nach den Figuren 5 bis 7 die Kanäle 3 jeweils teilweise durch das Einlegeteil 4 und teilweise durch die Auskleidung 18 gebildet sind. In jeder Ausführungsform nach den Figuren 4 bis 7 sind Fügestellen 9 sowohl an den Randabschnitten 5 des Metallprofils 2 als auch mittig im Bereich der Basisfläche 7 vorgesehen. In den Ausführungsbeispielen nach den Figuren 6 und 7 befinden sich die mittig angeordneten Fügestellen 9 an einer nach außen bzw. innen gerichteten Nut 20 des Metallprofils 2, welche zu einer weiteren Erhöhung der Stabilität des Verbundbauteils 1 beiträgt. Die an die mittig angeordneten Fügestellen 9 anschließenden Seitenwände 16 der Kanäle 3 werden auch als Stege 21 bezeichnet. Die Stege 21 erstrecken sich nicht notwendigerweise parallel zu den Seitenabschnitten 6 des Metallprofils 2, sondern können alternativ eine in Draufsicht in Richtung auf die Basisfläche 7 runde Form aufweisen und.damit wie einzelne Säulen im Kanal 3 angeordnet sein. In diesen Bereich taucht ein Stempel ein, welcher bei Bedarf die entsprechenden Fügekräfte beim Kragenfügen abstützen kann.

Im Gegensatz zu den vorstehend erläuterten Ausführungsbeispielen sind die Stege 21 im Ausführungsbeispiel nach Figur 8 nicht durch das an den Randabschnitten 5 befestigte Einlegeteil 4 gebildet, sondern durch ein weiteres, ausschließlich an der Basisfläche 7 befestigte Einlegeteil 22. Beide Einlegeteile 4,22 sind vorgefertigt und werden nachträglich im PMA-Verfahren mittels Kragenfügen am Metallprofil 2 befestigt. Zur Fixierung der Stege 21 des an die Basisfläche 7 grenzenden Einlegeteils 22 weist das in der Darstellung obere Einlegeteil 4 vier in Längsrichtung des Metallprofils 2 verlaufende Nuten 23 oder Hohlzylinder auf. Zwischen den Seitenabschnitten 6 und den Kanälen 3 sowie zwischen den beiden Kanälen 3 ist jeweils ein Freiraum 19 gebildet, welcher als Kabelkanal 24 nutzbar ist.

Eine Alternative zu dem in Figur 8 dargestellten Verbundbauteil 1 zeigt Figur 8a. Das an den Randabschnitten 5 befestigte Einlegeteil 4 weist Stege 21 auf, die an einem weiteren Einlegeteil 25, welches sich an der Basisfläche 7 befindet, zur Anlage kommen. Das Einlegeteil 25 weist entsprechende Nuten zur Aufnahme und gegebenenfalls zur Fixierung der Stege 21 auf. Alternativ kann das Einlegeteil 25 aus einem elastischem Material, beispielsweise aus einem elastomeren Kunststoff oder aus Gummi ausgebildet sein, so dass die Stege im zusammengebauten Zustand dichtend an diesem anliegen, beziehungsweise fixiert sind, wobei das dichtenden Anliegen insbesondere durch leichtes Eindrücken des elastischen Materials durch die Stege 21 erfolgt. Das Einlegeteil 4 ist vorgefertigt und wird nachträglich im PMA-Verfahren mittels Kragenfügen am Metallprofil 2 befestigt, wobei bevorzugt auch das Einlegeteil 25 in der angegebenen Weise am Metallprofil befestigt werden kann.

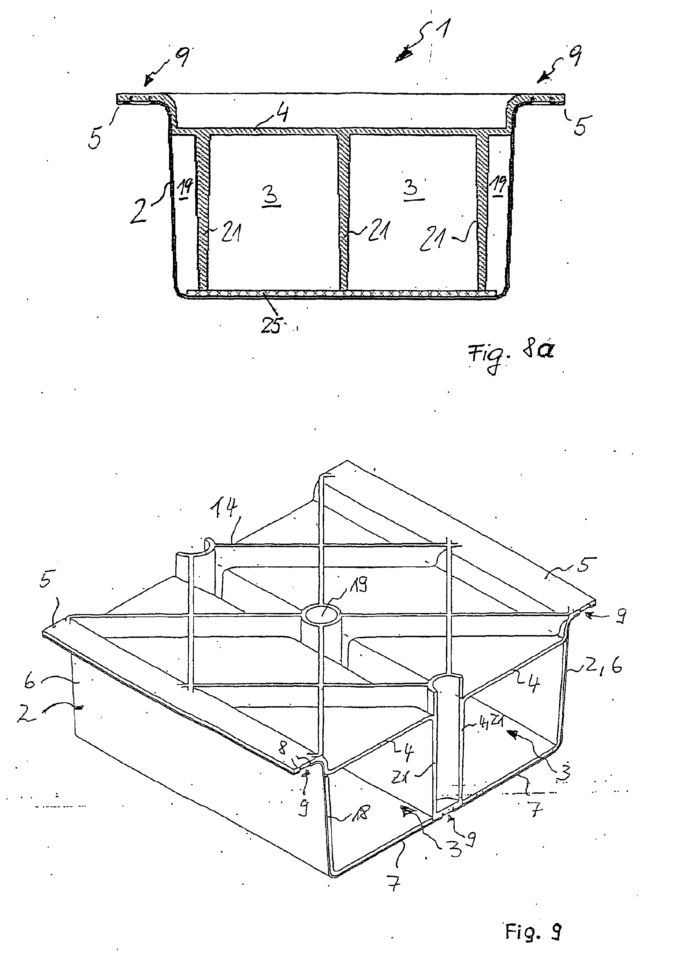

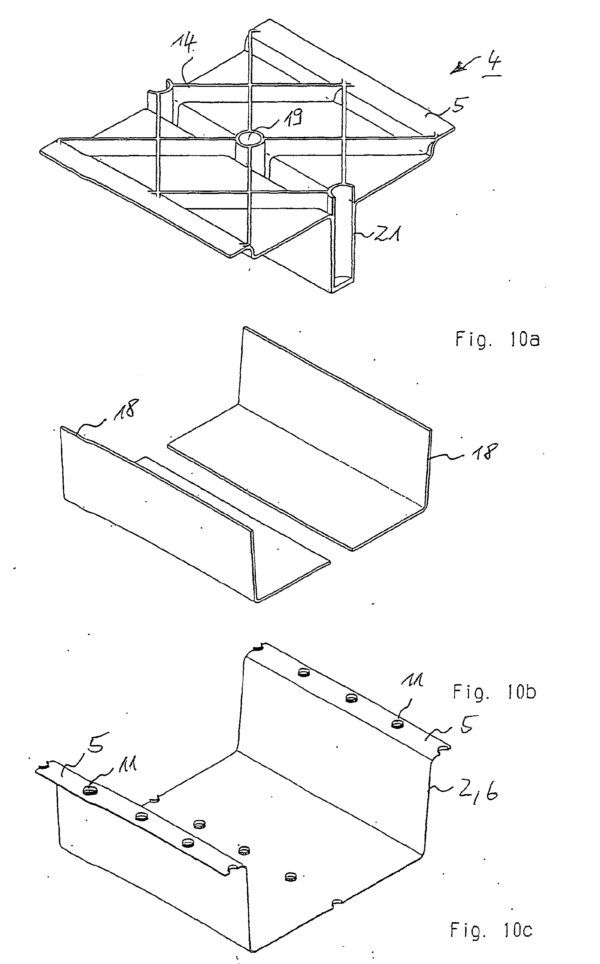

Figur 9 zeigt ein Verbundbauteil 1 mit zwei Kanälen 3 in perspektivischer Darstellung. Das Einlegeteil 4 weist zur Verstärkung die Rippenstruktur 4 auf. Die Fügestellen 9 sind an den Randabschnitten 5 des Metallprofils 2 und mittig im Bereich der Basisfläche 7 vorgesehen. Die einzelnen Elemente - das Einlegeteil 4, die Auskleidung 18, das. Metallprofil 2 - des Verbundbauteils 1 gemäß Figur 9 sind separat in perspektivischer Darstellung in den Figuren 10a bis 10c gezeigt.

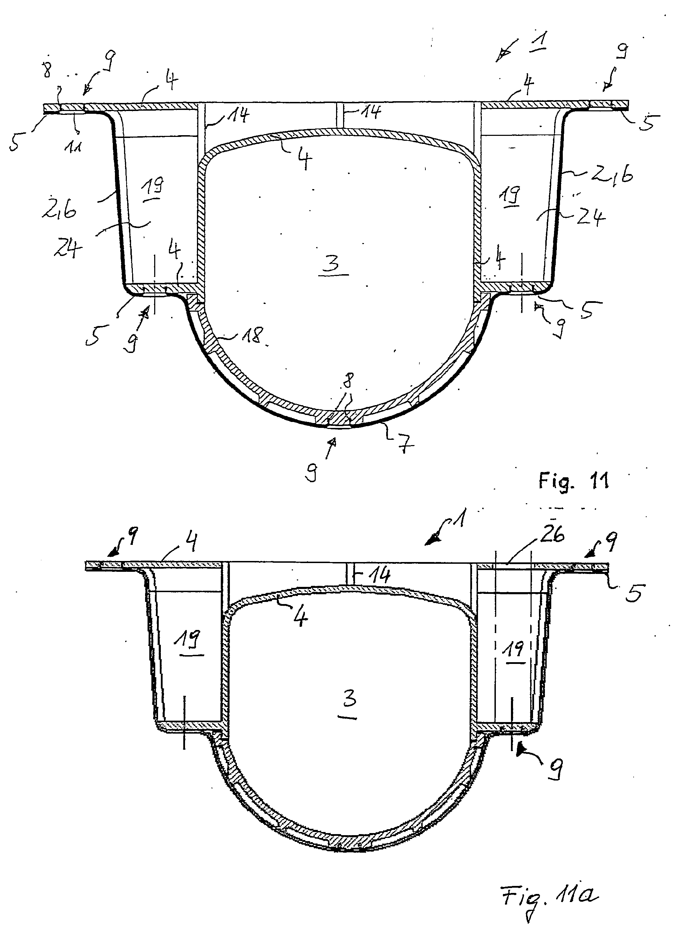

Figur 11 zeigt ein alternatives Ausführungsbeispiel für ein Verbundbauteil 1 mit einem kreisförmigen Kanal 3. Seitlich des Kanals 3 sind Freiräume 19 gebildet, welche als Kabelkanal 24 nutzbar sind. Das Verbundbauteil 1 weist einen zweistufigen Rundabschnitt 5 des Metallprofils 2 auf. Der jeweilige Rundabschnitt 5 ist dabei mit Erhebungen 8 versehen, an denen Fügestellen 9 zur Erhöhung der Stabilität gebildet sind. Eine weitere Fügestelle 9 ist mittig im Bereich der Basisfläche 7 vorgesehen.

Figur 11 a zeigt ein dem vorhergehenden Ausführungsbeispiel entsprechendes Verbundbauteil 1 in einer versetzten Schnittdarstellung, wobei der Schnitt in der rechts dargestellten Hälfte im Bereich der seitlich, unteren Fügestellen 9 und in der links dargestellten Hälfte versetzt zu diesen verläuft. Vorteilhafterweise weist das Einlegeteil 4 im Bereich über der seitlich, unteren Fügestelle 9 eine Aussparung 26 auf. Diese kann beispielsweise als Öffnung zum Einführen eines für den Fügevorgang erforderlichen Werkzeugs, beispielsweise eines Stempels, dienen.

### Bezugszeichenliste

- 1: Verbundbauteil
- 2: Metallprofil
- 3: Kanal
- 4: Einlegeteil
- 5: Randabschnitt
- 6: Seitenabschnitt
- 7: Basisfläche
- 8: Erhebung
- 9: Fügestelle
- 10: Haltekontur
- 11: Öffnung
- 12: Hinterschnitt
- 13: Rechteckprofil
- 14: Rippenstruktur
- 15: Abdeckung
- 16: Seitenwand
- 17: Grundfläche
- 18: Auskleidung
- 19: Freiraum
- 20: Nut
- 21: Steg
- 22: Einlegeteil
- 23: Nut
- 24: Kabelkanal
- 25: Einlegeteil
- 26: Aussparung

## Patentansprüche

1. Verbundbauteil, insbesondere Querträger zwischen A-Säulen eines Kraftfahrzeuges, mit einem offenen Metallprofil (2) und einem in diesem angeordneten, aus Kunststoff gebildeten, längs des Metallprofils (2) verlaufenden Kanal (3), **dadurch gekennzeichnet, daß** der Kanal ein Lüftungskanal ist und zur Bildung einer Wandung und/oder mechanischen Stabilisierung des Kanals (3) ein zumindest teilweise aus Kunststoff gefertigtes Einlegeteil (4,22) derart an der Wandung des Metallprofils (2) befestigt ist, dass eine an einer Öffnung (11) in der Wandung des Metallprofils (2) aus diesem ausgeformte Haltekontur (10) den in diese eingepressten Kunststoff des Einlegeteils (4,22) hinterschneidet.

2. Verbundbauteil nach Anspruch 1, **dadurch gekennzeichnet, dass** die Haltekontur (10) als stanzkragenartige Erhebung (8) des Metallprofils (2) ausgebildet ist.

3. Verbundbauteil nach Anspruch 1 oder 2, **dadurch gekennzeichnet, dass** das Metallprofil (2) als Hutprofil ausgebildet ist.

4. Verbundbauteil nach einem der Ansprüche 1 bis 3, **gekennzeichnet durch** ein weiteres Kunststoffteil (18) zur Bildung zumindest eines Teiles der Wandung des Lüftungskanals (3).

5. Verbundbauteil nach einem der Ansprüche 1 bis 4, **dadurch gekennzeichnet, dass** das Einlegeteil (4,22) eine versteifende Rippenstruktur (14) aufweist.

6. Verbundbauteil nach einem der Ansprüche 1 bis 5, **dadurch gekennzeichnet, dass** der Lüftungskanal (3) das Metallprofil (2) nur teilweise ausfüllt.

7. Verbundbauteil nach Anspruch 6, **dadurch gekennzeichnet, dass** innerhalb des Metallprofils (2) mehrere Kanäle (3) angeordnet sind.

8. Verbundbauteil nach Anspruch 6 oder 7, **dadurch gekennzeichnet, dass** innerhalb des Metallprofils (2) ein Kabelkanal (24) angeordnet ist.

## Claims

1. A composite part, especially a cross member between A-pillars of a motor vehicle, having an open metal section (2) positioned inside and running along which is a plastic duct (3),
**characterised in that**
the duct is an air distribution duct, and in order to form a wall of and/or to mechanically stabilise the duct (3) an insert (4, 22) made at least partially of plastic is fixed to the wall of the metal section (2) in such a manner that a retaining contour (10) formed from the wall of the metal section (2) at an opening (11) in said wall undercuts the plastic of the inset (4, 22) pressed into said retaining contour (10).

2. A composite part in accordance with claim 1,
**characterised in that**
the retaining contour (10) is designed as a stamped collar-like raised part (8) of the metal section (2).

3. A composite part in accordance with claim 1 or 2,
**characterised in that**
the metal section (2) is designed as a top hat section.

4. A composite part in accordance with one of claims 1 to 3,
**characterised by**
a further plastic part (18) forming at least one part of the wall of the air distribution duct (3).

5. A composite part in accordance with one of claims 1 to 4,
**characterised in that**
the insert (4, 22) has a reinforcing rib structure (14).

6. A composite part in accordance with one of claims 1 to 5,
**characterised in that**
the air ventilation duct (3) fills only part of the metal section (2).

7. A composite part in accordance with claim 6,
**characterised in that**
several ducts (3) are positioned inside the metal section (2).

8. A composite part in accordance with claim 6 or 7,
**characterised in that**
a cable duct (24) is positioned inside the metal section (2).

## Revendications

1. Élément composite, en particulier traverse entre des montants avant d'un véhicule automobile, avec un profilé métallique ouvert (2) et une canalisation (3) disposée dans celui-ci, réalisée en matière plastique et s'étendant sur la longueur du profilé métallique (2), **caractérisé en ce que** la canalisation est une canalisation de ventilation et **en ce que**, pour la formation d'une paroi et/ou pour la stabilisation mécanique de la canalisation (3), un insert (4, 22) réalisé au moins partiellement en matière plastique est fixé sur la paroi du profilé métallique (2), de telle manière qu'un contour de maintien (10) formé sur une ouverture (11) dans la paroi du profilé métallique (2) à partir duquel il est bâti forme une contre-dépouille avec la matière plastique de l'insert (4, 22) qui y est injectée.

2. Élément composite selon la revendication 1, **caractérisé en ce que** le contour de maintien (10) est réalisé comme relief (8) en forme de collerette du profilé métallique (2).

3. Élément composite selon la revendication 1 ou la revendication 2, **caractérisé en ce que** le profilé métallique (2) est réalisé comme profilé chapeau.

4. Élément composite selon l'une des revendications 1 à 3, **caractérisé par** une autre pièce en matière plastique (18) pour la formation d'au moins une partie de la paroi de la canalisation de ventilation (3).

5. Élément composite selon l'une des revendications 1 à 4, **caractérisé en ce que** l'insert (4, 22) présente une structure de renforcement à nervures (14).

6. Élément composite selon l'une des revendications 1 à 5, **caractérisé en ce que** la canalisation de ventilation (3) ne comble que partiellement le profilé métallique (2).

7. Élément composite selon la revendication 6, **caractérisé en ce que** plusieurs canaux (3) sont disposés à l'intérieur du profilé métallique (2).

8. Élément composite selon la revendication 6 ou la revendication 7, **caractérisé en ce qu'**une canalisation de câbles (24) est disposée à l'intérieur du profilé métallique (2).
